# EUROPEAN PATENT APPLICATION

(11) **EP 4 589 227 A1**
(43) Date of publication of application: **23.07.2025**
(21) Application number: 24153066.6
(22) Date of filing: 22.01.2024
(51) Int. Cl.: F25D 21/08, B65G 1/00, F25D 21/06

(54) **A DEFROSTING MODULE**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

A defrosting module for defrosting a storage container of a storage and retrieval system, comprises a heat source for defrosting the storage container within a storage grid of the storage and retrieval system. The defrosting module is configured to be coupled with the storage container by a robotic container-handling vehicle of the storage and retrieval system.

## Description

### TECHNICAL FIELD

The disclosure relates to a defrosting module. More particularly, it relates to a defrosting module for defrosting a storage container of an automated storage and retrieval system, and a method of defrosting a storage container in the automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated as needed as goods enter and leave the warehouse.

Warehouse workers may be assisted by robotic pickers and by automated inventory management systems. Automated transit systems may also be implemented in traditional warehouse set ups to move goods from their inventory location to a picking and/or packing station.

An alternative to a traditional warehouse set up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged above the grid, along which robotic container handling vehicles configured to lift containers from the grid can travel. The container handling vehicles are configured to transport containers from the grid and to deliver them to ports or stations at periphery of the grid so that the goods from within the container can be picked and packed.

A traditional warehouse set up may include one or more sections configured to store items in certain conditions. One example is a system for storing fresh food items, which require refrigeration to prevent spoilage.

In an automated storage and retrieval system, one known method for storing foods or other temperature-sensitive goods involves lowering the temperature across a portion of, or all of, the storage grid. However, serious problems and inefficiencies in the storage and retrieval system can arise as a result of a chilled grid arrangement. In particular, ice may begin to build up over time in or on the storage containers, which can lead to mechanical damage, reduced mobility, blockages, and handling difficulties. In this way, ice build-up can prevent containers from being efficiently retrieved and delivered to an access point or port of the storage system. It would therefore be beneficial to provide systems and methods which address the problems and inefficiencies of low-temperature automated storage and retrieval systems.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Figs. 5 shows a perspective view of a storage system comprising multi-container frames;
Figs. 6A and 6B show perspective views of a stacker frame suitable for use in the system of Fig. 5;
Figs. 7A-C show sequential perspective views of a stacker frame coupling with a defrosting module;
Fig. 8 shows a partial cross-section of a stacker frame coupled with a defrosting module;
Fig. 9 shows a perspective view of a storage container prior to coupling with an alternative defrosting module;
Figs. 10A-C show sequential perspective views of a storage container coupling with an alternative defrosting module;
Fig. 11 shows a perspective view of a storage system comprising a storage grid, a robotic container-handling vehicle, and the defrosting module of Figs. 10 arranged at a dock of the storage grid; and
Fig. 12 is a flowchart of a method according to the present disclosure.

### DETAILED DESCRIPTION

The present inventor has realised that the above-referenced problems associated with a low-temperature grid system can be addressed by providing a defrosting module for defrosting a storage container of a storage and retrieval system. The storage container may be a target storage container, e.g., a storage container which has been identified as requiring defrosting, and may refer to any form of container arranged within the storage grid.

In overview, the disclosure relates to a defrosting module comprising a heat source for defrosting the storage container within a storage grid of the storage and retrieval system, the defrosting module being configured to be coupled with the storage container. Coupling the defrosting module and the storage container is achieved using at least one robotic vehicle, e.g., a robotic container-handling vehicle, of the storage and retrieval system.

In some implementations, the defrosting module comprises an inlet or a drain in order to extract moisture from the storage container which is being defrosted, thereby addressing water build up or condensation which may occur inside or on the container during the defrosting process. The inlet can be coupled to the bottom of the storage container, such that gravity facilitates water to flow out from the storage container and into the inlet of the defrosting module. In order to further facilitate water extraction, the inlet can comprise a vacuum system to mechanically extract water or water vapour from the storage container. The vacuum system, or any other suitable mechanical water extraction means known to the skilled person, allows the inlet to extract water (and water vapour) regardless of the orientation of the inlet within the storage container, which may be necessary when, for example, the inlet of the defrosting module is coupled to a top or an inner portion of the storage container. In order to facilitate coupling of the inlet with the storage container, the inlet can be configured to mate with an outer surface of the storage container. However, the inlet need not be inserted inside the storage container. For example, the storage container may comprise a chute or a perforated base portion which directs water out of the storage container, e.g., into the inlet below.

The heat source of the defrosting module can be of any form suitable to increase the temperature within the storage container, such as a heated block or a fan heater. For example, the heat source may comprise an outlet configured to emit heated air, preferably into the storage container, for a more efficient heat transfer. The defrosting module may additionally or alternatively comprise an air pump, to facilitate extensive circulation of air around and/or through the storage container. In order to emit air into the storage container and/or to facilitate coupling of the outlet with the storage container, the outlet can be configured to mate with an outer surface of the storage container. Alternatively, the outlet can be inserted into an open end of the storage container to emit air from within the storage container.

In some implementations, the defrosting module includes a lid configured to provide an enclosed volume for the storage container when the defrosting module is coupled to the storage container. For example, the defrosting module may comprise a lip extending around an upper periphery of the defrosting module, such that the lip is configured to act as a lid for the storage container once the defrosting module is inserted into an open end of the storage container. Alternatively, the defrosting module may comprise a lid which can be activated upon coupling the storage container with the defrosting module, to cover and close the storage container. The enclosed space of the storage container speeds up the warm-up time of the storage container, reduces heat loss to the environment of the storage grid, and therefore improves the efficiency of the defrosting. It will be appreciated that, in some examples, respective lids may already be provided on the storage containers of the grid.

Coupling the defrosting module and the storage container can be achieved in multiple ways. For example, the defrosting module, or a portion of the defrosting module, may be placeable inside of an open end of the storage container. The placement may be wholly inside or partially inside, e.g., with a lid of the defrosting module remaining outside so as to enclose the container. In either case, the heat source and/or the inlet of the module are placed within an inner portion of the storage container to facilitate direct heat transfer and/or water extraction from therewithin. In other examples, the defrosting module comprises a dock. The storage container is placeable on the dock of the defrosting module, thereby coupling the storage container and the defrosting module. In this way, the defrosting module can be moved to the storage container, the storage container can be moved to the defrosting module, or both module and container can be transferred to an independent location. Permutations of these examples are also considered. For example, in one configuration, the defrosting module includes a first unit placeable at least partially inside the storage container, and a second unit comprising a dock configured to receive the storage container. The first and second units of the defrosting module can be positioned above one another (i.e., an upper and a lower unit) and be vertically moveable relative to one another, so as to couple the first unit with the second unit. In this way, a storage container which has been transferred and docked onto the second unit of the defrosting module is shifted and coupled with the first unit of the defrosting module (or vice versa). In such examples, the heat source and/or the inlet, respectively, can be provided on the upper unit, the lower unit, or both.

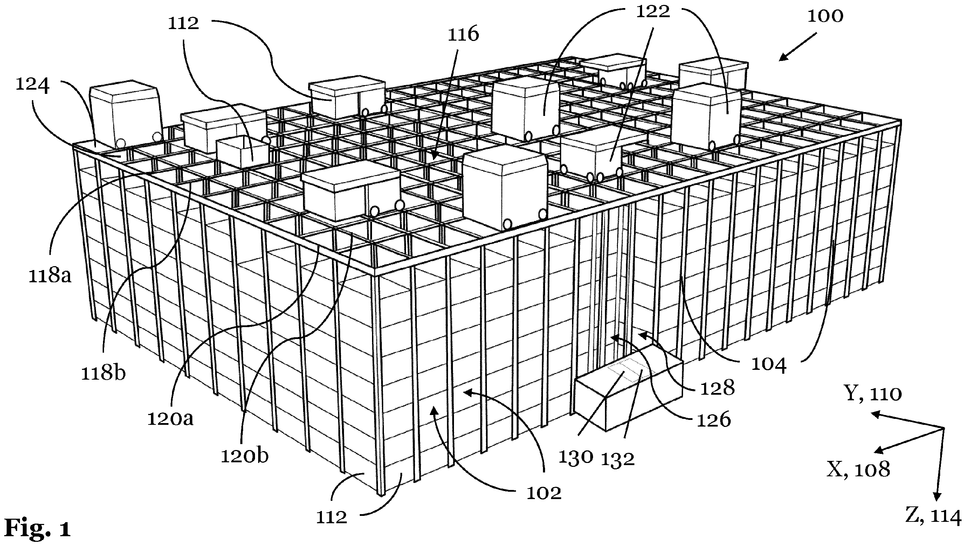

The defrosting module, as outlined in any of the examples herein, may either be at a fixed location in the grid (such as at a port of the grid), or may be retrievable by at least one robotic vehicle of the grid. In particular, the defrosting module maybe retrievable by a robotic container-handling vehicle, e.g., one of the robotic container-handling vehicles as discussed above with reference to Figs. 1 to 3. Alternatively, the defrosting module may be retrievable by a bespoke robotic defroster-handling vehicle, which is configured to attach to corresponding attachment features of the defrosting module and to arrange the defrosting module within the grid.

In implementations where the defrosting module is mobile, it will be appreciated that the defrosting module may be locally or battery powered. For example, the defrosting module may include batteries and may be configured to dock and recharge at a charging station arranged in the grid. Alternatively, the mobile defrosting module could be plugged into a mains supply, for example upon being docked at or placed at a specific location in the grid.

The disclosure also relates to a container storage and retrieval system including: a storage grid, one or more robotic vehicles arranged to traverse the storage grid, a storage container stored within the storage grid, and the defrosting module as described above.

The disclosure also relates to a method of defrosting a storage container of a storage and retrieval system. The method includes causing one or more robotic vehicles to couple a storage container, stored within a storage grid of the storage and retrieval system, with a defrosting module. Coupling the storage container with the defrosting module may comprise docking the storage container to the defrosting module and/or placing the defrosting module at least partially inside of the storage container.

In some implementations, prior to coupling the storage container and the defrosting module, the method can include identifying that the storage container is empty and suitable for defrosting (to avoid accidental heating of foodstuffs that remain in the container, for example). Additionally or alternatively, the method may include determining that the defrosting process is sufficiently complete. To this end, the defrosting module may comprise a humidity sensor configured to determine a humidity level within the storage container and/or within the defrosting module. Defrosting may be determined as being complete once the humidity reaches a threshold and/or reaches a peak. Alternatively, the method may comprise coupling the storage container and the defrosting module for a predetermined time period, such as a predetermined defrosting time period associated with the coupled storage container.

The disclosure similarly relates to a controller comprising a processor and a memory, the controller configured to perform any of the methods as disclosed herein.

### Automated storage and retrieval system overview

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

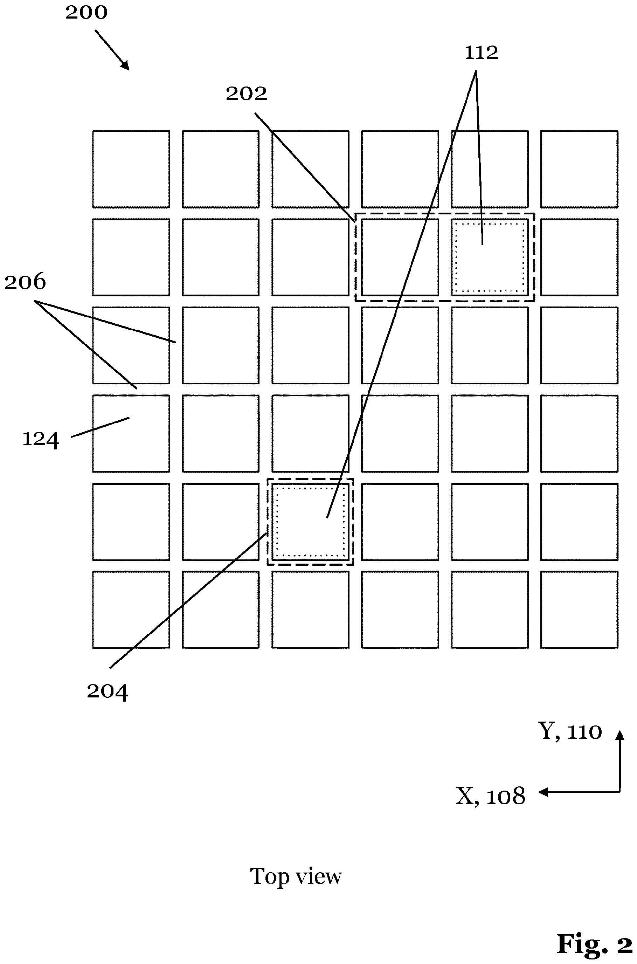

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

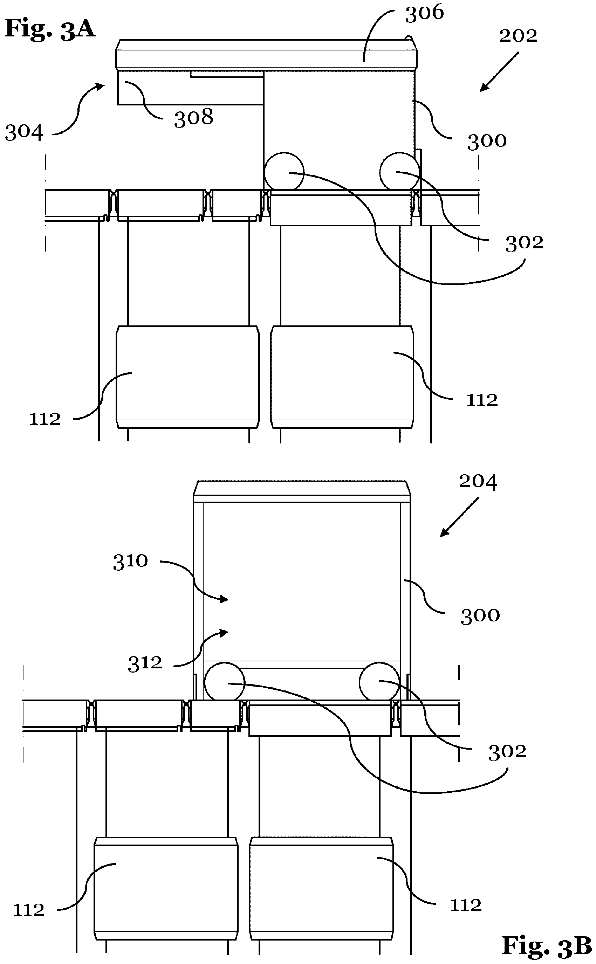

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

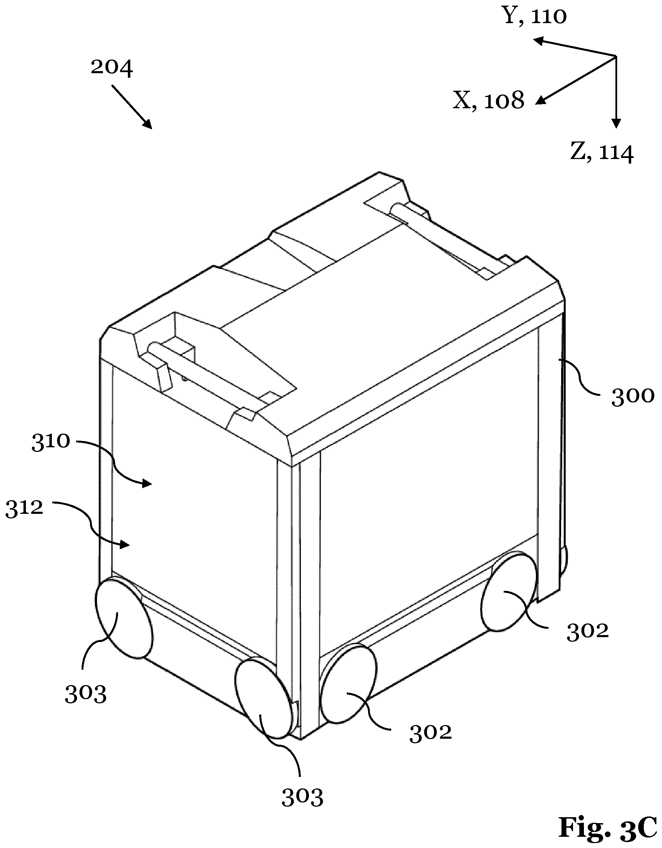

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

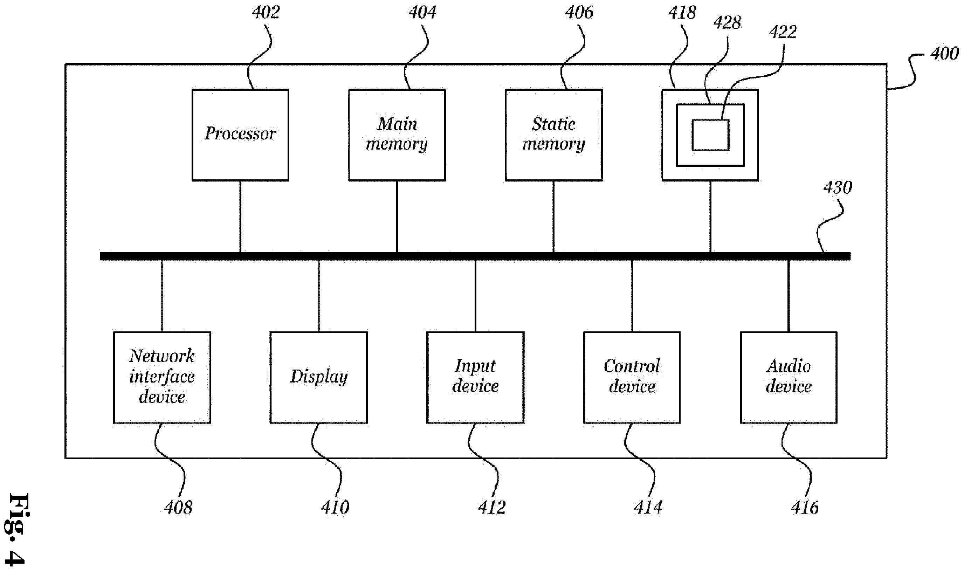

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Multi-container frames

The present disclosure is also relevant to multi-container frames, in other words frames or containers that are themselves configured to hold a plurality of other smaller containers. These multi-container frames can be stored and handled in the automated storage and retrieval system of the present disclosure in the same manner as the bins or containers 112 referenced above in relation to Figures 1-4. Accordingly, multi-container frames represent an example implementation of the containers or bins 112 described above and shown in Figs. 1, 2, 3A and 3B. A multi-container frame may be configured to accommodate between two and six containers in a typical implementation, although larger multi-container frames are possible.

In one implementation of the present disclosure, the defrosting module is configured to couple with, and defrost, multi-container frames configured to accommodate a plurality of smaller bins or containers within them. In some cases, the smaller containers can be stacked on top of one another within the multi-container frame. In that case, the multi-container frame may be referred to as a "stacker frame" because the containers that may be held within it are stacked on top of one another. For simplicity, all of the multi-container frames shown in the Figures are stacker frames. However, it will be appreciated that in other implementations (not shown in the accompanying Figures), the multi-container frame may accommodate a plurality of containers side-by-side or otherwise arranged, and the containers may not be stacked on top of one another within the multi-container frame.

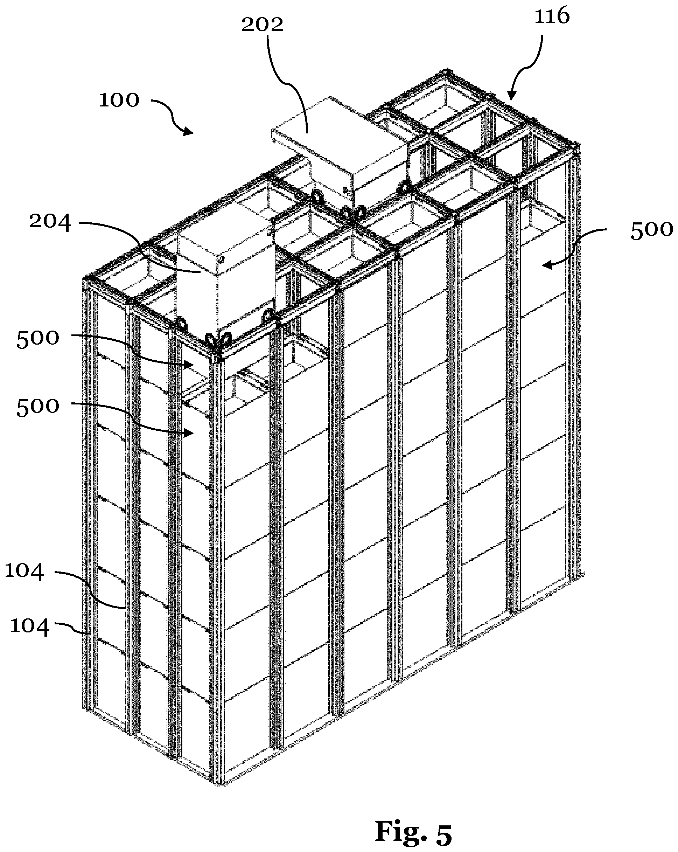

Turning now to Figure 5, this figure shows a subsection of the automated storage and retrieval system shown in Fig. 1. A portion of the grid 100 can be seen together with robotic container-handling vehicles 202, 204 operating on the rail system 116. In the system shown in Figure 5, the storage containers 112 stored in the visible portion of the grid 100 are multi-container frames 500. As noted above, in this implementation the multi-container frames 500 are all stacker frames 500, in which the containers are stored one on top of the other. Accordingly, for simplicity, the phrase "stacker frame" will be used hereafter. However, the following description applies to any form of multi-container frame.

As can be seen from Figure 5, one of the stacker frames 500 is in the process of being lifted by container-handling vehicle 204. This lifting is performed in a similar manner as discussed above in relation to the containers 112 of Figure 1 and the lifting mechanisms discussed in relation to Figs. 3B and 3C. Further details of how stacker frames 500 can be lifted will be described below.

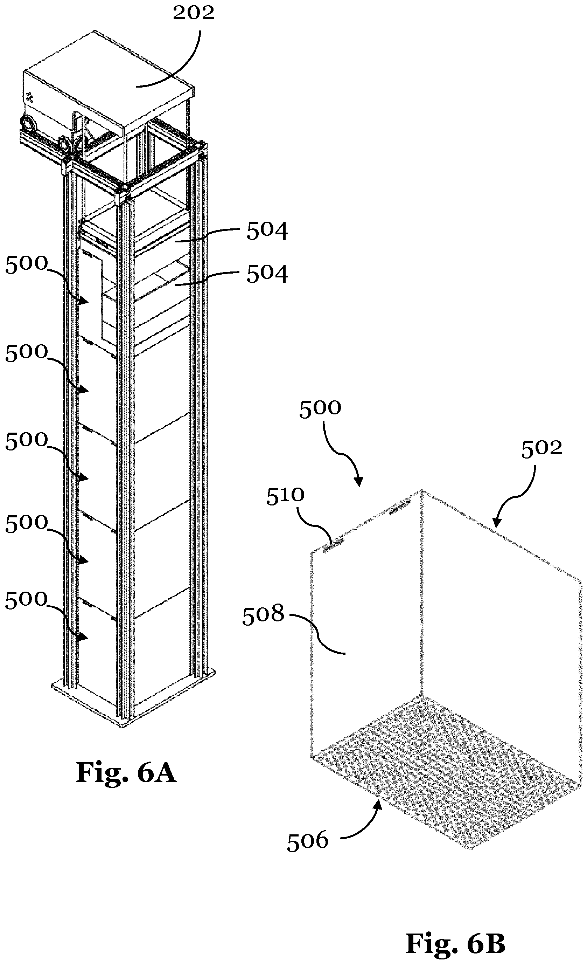

Example stacker frames 500 are shown in more detail in Figs. 6A and 6B. Each of the stacker frames 500 has a top end 502 for allowing a storage container 504 to pass into the stacker frame. As already noted, each stacker frame 500 is configured to accommodate a plurality of storage containers 504 stored one on top of another in a vertical stack within the stacker frame 500. Each stacker frame 500 is therefore configured to support the lowermost storage container 504 within the stacker frame 500. One or more further storage containers 504 are then placed on top of the lowermost storage container 504 and accommodated within the stacker frame 500.

Each stacker frame 500, comprises a base 506, for supporting a lowermost storage container 504. In the present example, side walls 508 extend between the base 506 and the top end 502, and comprise connecting recesses 510 which a container-handling vehicle 202, 204 can couple to in order to lift or lower the stacker frame 500. In other examples stacker frame 500 may simply comprise a framework defining the frame within which the containers 504 are held and so side walls 508 may be largely omitted.

Fig. 6B illustrates a perspective view of stacker frame 500. In this implementation, the base 506 is perforated. A perforated base facilitates drainage of water out of the storage container during defrosting. The drained water may then be extracted by the defrosting module, e.g., through an inlet of the defrosting module, or it may flow into a separate drainage system positioned beneath the defrosting zone.

It will be appreciated that the methods and systems described herein apply equivalently for defrosting single storage containers and multi-container frames. For simplicity, whilst describing the Figures, reference is made to the type of container illustrated in the respective Figure. Nevertheless, the defrosting module may be configured to couple to one or more types of storage container arranged in the grid, including storage containers / bins and multi-container / stacker frames configured to accommodate a plurality of containers within them. Accordingly, reference to, or illustration of, one particular form of container is not to be considered as limiting. For example, whilst Fig. 6B illustrates a stacker frame having a perforated base, it will be appreciated that a perforated base may similarly be provided on any storage container within the grid to achieve the same technical advantage.

### Defrosting Systems

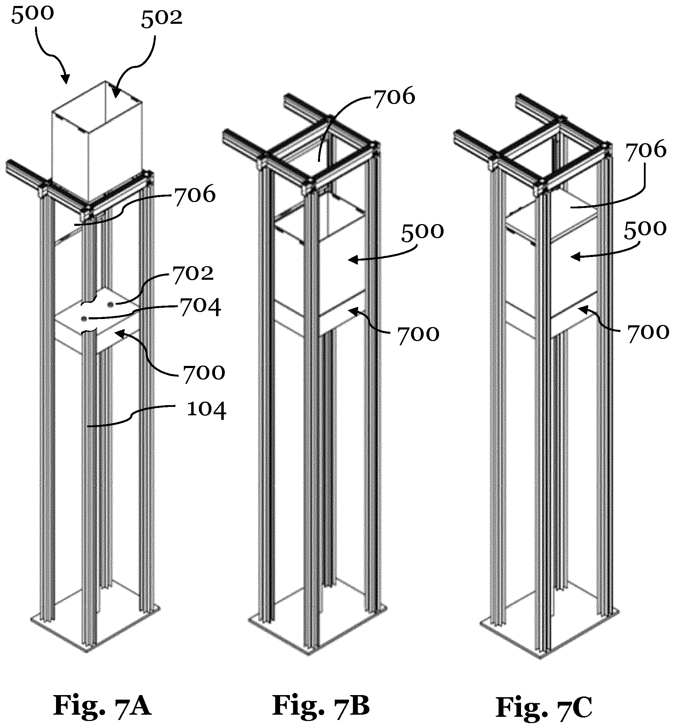

Figs. 7A, 7B, and 7C illustrate three stages of a stacker frame lowering onto, docking, and coupling with a defrosting module, respectively. The lowering of the stacker frame 500 is carried out by a robotic container-handling vehicle (not shown), in much the same way as the lifting methods discussed above and shown in Fig. 5. With reference to Fig. 7A, an inlet 702 and an outlet 704 (visible behind a cut-out portion of the vertical frame member 104, the cut out being provided merely for illustrative purposes) are provided on the upper surface of the defrosting module 700. The inlet 702 and the outlet 704 protrude from the defrosting module 700 to couple with and extend into the stacker frame 500, to facilitate transfer of heat in and water out. In particular, the defrosting module 700 comprises a heat source in communication with outlet 704, and a water drainage or collection means in communication with inlet 702. For example, the defrosting module 700 may comprise a water storage container or may be provided with an outflow pipe to drain the water out of the storage grid 100.

The defrosting module 700 includes a lid 706 provided in an open configuration at an upper portion of the defrosting module, as shown in Figs. 7A and 7B. The lid is configured to cover and close the top end 502 of the stacker frame 500, as shown in Fig. 7C. The lid 706 is lowered onto the docked stacker frame 500 by any suitable means, such as a mechanism activated upon receiving the stacker frame 500, or remotely by a controller of the storage and retrieval grid, or by a robotic vehicle or user. The lid 706 provides an enclosed space within the stacker frame 500. By having an enclosed space, the inside of stacker frame 500 is more efficiently heated by the heat source of the defrosting module 700 and the heat loss to the environment of the storage grid is reduced.

In some implementations, not shown, a stacker frame or a storage container may already come complete with a covering or lid, and as such the lid 706 of the defrosting module 700 is not required.

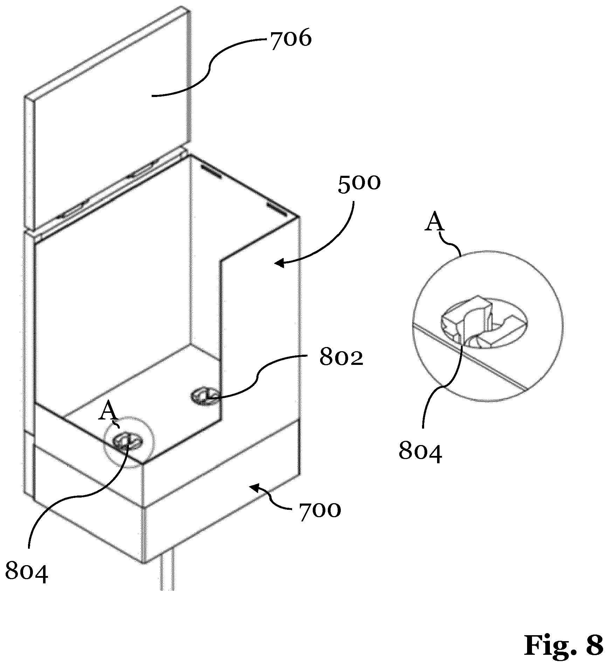

With reference to Fig. 8, the stacker frame 500 comprises two openings 802, 804 which correspond with the locations of the inlet 702 and outlet 704 of the defrosting module 700 as seen in Fig. 7A. The openings 802, 804, which are shown in more detail in close-up A of Fig. 8, allow the respective inlet 702 and outlet 704 to mate with the stacker frame and enable transfer of air and water, respectively. In the illustrated implementation, the openings 802 and 804 each further comprise a valve mechanism for receiving and/or guiding the inlet 702 and outlet 704, respectively. The valve mechanism is inwardly biased to close the openings prior to coupling, and, upon coupling with the defrosting module 700, the valve mechanism is opened by, and grips, the inlet 702 / outlet 704. Alternatively, the valve mechanism may be any form of coupling mechanism known in the art and suitable for receiving an inlet or outlet.

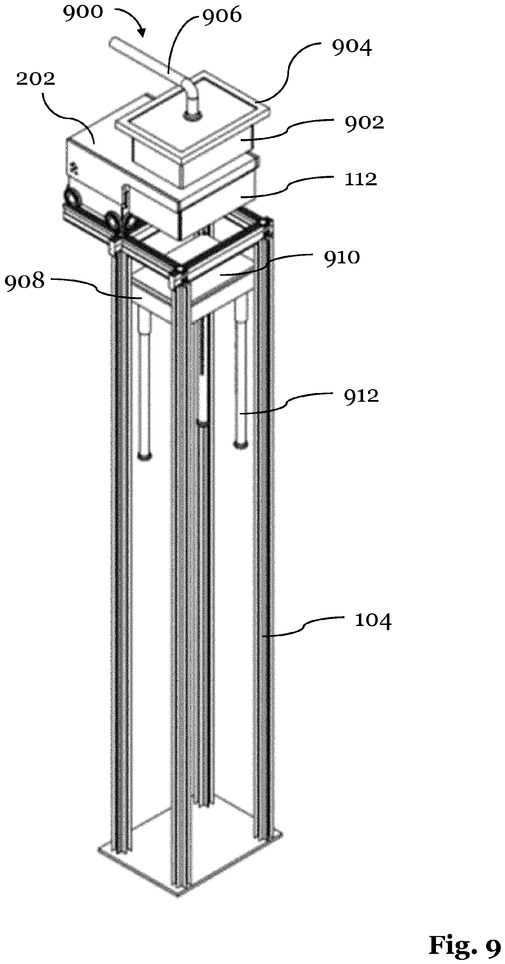

With reference to Fig. 9, in a specific form of the defrosting module 900, the defrosting module 900 comprises an upper unit 902 and a lower unit 908. A robotic vehicle 202 delivers and lowers a storage container 112 onto the lower unit 908 of the defrosting module 900. The lower unit 908 includes supports 912 which are configured, once the storage container 112 is in place, to raise the lower unit 908 upwards. This upward motion positions the upper unit 902 inside of an open end of the received storage container 112 that is positioned on the lower unit 908. In this way, the storage container 112 is coupled with the defrosting module 900 and defrosting can begin.

The upper unit further includes a lip 904, extending around a periphery of the upper unit 902, which is wider than the storage container 112 so as to effectively seal the storage container 112 upon coupling therewith. In this way, lip 904 acts as a lid for the storage container 112, providing an enclosed space within the storage container 112 which improves heating efficiency, as discussed above with reference to Fig. 7C.

In the illustrated implementation of Fig. 9, the lower unit 908 defrosting module is provided with a heat source in the form of hot plate 910, and the upper unit 902 is provided with a vacuum system to extract water from the storage container 112 and out through conduit 906. Nevertheless, it will be appreciated that permutations of the features of the upper and lower units 902, 908 are also possible. For example, a heat source can additionally or alternatively be provided on the upper unit 902, and/or a drainage system or water inlet can be provided with the lower unit 908.

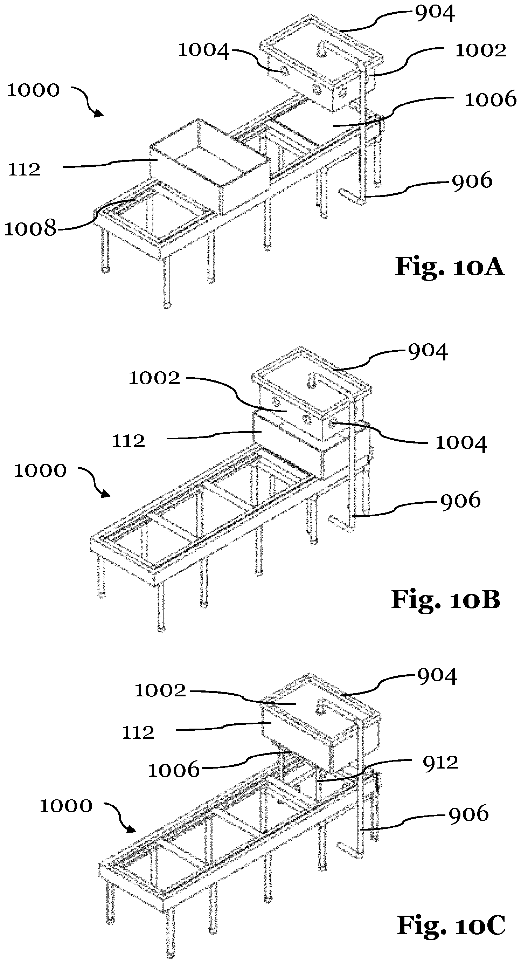

Figs. 10A to 10C depict three stages of a storage container 112 coupling with another example form of the defrosting module 1000. In the sequence shown in Figs. 10A and 10B, the storage container is transferred along rails 1008 and positioned upon a lower unit or base plate 1006 of the defrosting module 1000. This transferring can happen in any suitable way, for example the rails 1008 can be motorised and/or the storage container 112 can be moved by a container-handling vehicle 202, 204. Once the container 112 is positioned, the base plate 1006 is configured to drive the storage container 112 upwards, to position an upper unit 1002 within the storage container 112 as shown in Fig. 10C. The defrosting module 1000 comprises lip 904 to act as a lid for the storage container 112, in a similar manner to the lip 904 if Fig. 9. As shown in Figs. 10A and 10B, the upper unit 1002 comprises a heat source and an air pump or vacuum system which circulates hot air through and extracts moisture from the storage container 112 using channels 1004. In this way, the upper unit 1002 acts as both a defroster and dryer.

The defrosting module 1000 comprises conduit 906 for conveying water, and/or for protecting electrical wiring providing power to the defrosting module 1000 (e.g., for powering a heat source, vacuum system, sensors, and/or communication means that maybe included in the upper unit 1002).

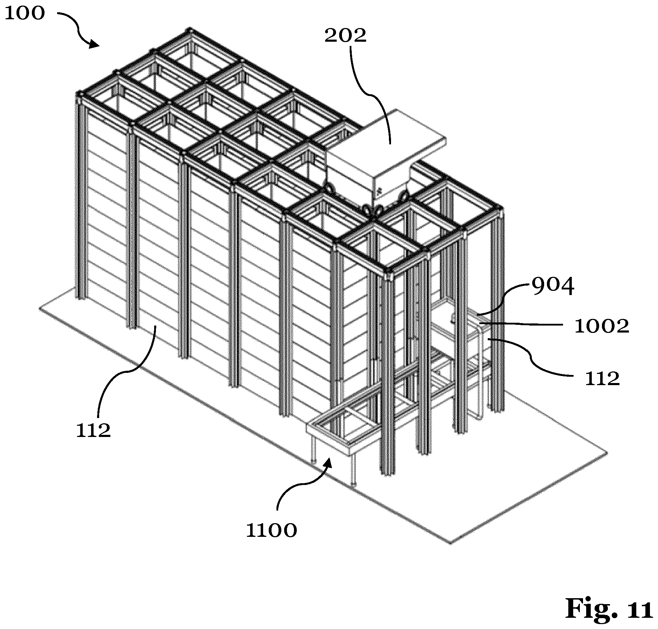

The defrosting module 1000 of Fig. 10 is configured to be positioned in a fixed position in the storage grid 100, for example at a port 1100 as shown in Fig. 11. By providing the defrosting module 1000 at a port 1100 of the grid 100, a user has better access to the storage container 112 prior to defrosting, to empty the container and prevent unwanted spoilage of temperature-sensitive goods inside. The proximity of the defrosting system to a port 1100 also allows a user, who may have identified that a storage container needs defrosting, to efficiently defrost and retrieve the storage container 112. Defrosting processes can, of course, also be entirely automatic and can be controlled by a controller of the storage and retrieval system such as processing system 400.

### Defrosting Methods

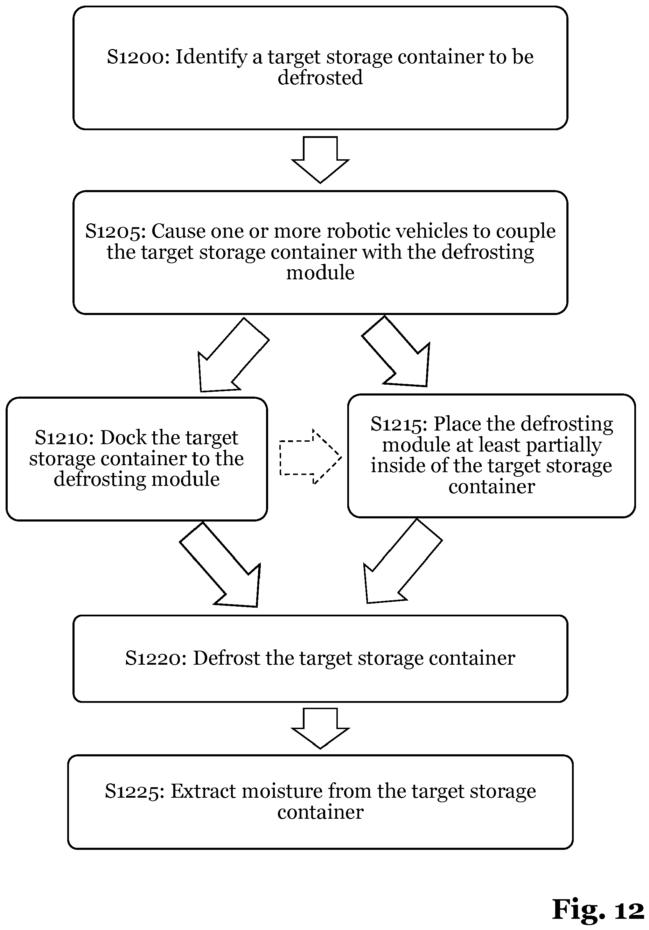

With this in mind, and with reference to Fig. 12, a method of defrosting a storage container arranged in an automated storage and retrieval system is shown. The method may be computer-implemented and may be carried out by a controller of the storage and retrieval system, such as processing system 400. One or more controllers or control systems may cooperate to perform the method.

The method comprises identifying, at step 1200, a target storage container for defrosting. The identification may comprise identifying a target storage container being in a low-temperature environment for a threshold amount of time, being accessed a threshold number of times, or being transferred out of a refrigerated area. The identification may further comprise identifying that a target storage container is empty, e.g., from a central database that records container contents or by using a weight verification. In some examples, the target storage container may be manually emptied by a user at a port of the storage and retrieval system. Additionally, a user may manually identify and notify the system that a target storage container requires defrosting.

When a target storage container is identified for defrosting, one or more robotic vehicles cause, at step 1205, the target storage container to couple with the defrosting module. In various implementations, either one or both of the defrosting module and target storage container may be moved by one or more robotic vehicles to couple the defrosting module and storage container, i.e., to dispose the defrosting module and the target storage container respectively in their various relative configurations to enable defrosting. Accordingly, the method can be applied for a mobile defrosting module, a fixed defrosting module, or a modular defrosting module. The flexibility in configuration, i.e., to allow for moving either the defrosting module or the storage container, or moving both, facilitates implementation of the defrosting systems described herein with storage and retrieval systems of various different set-ups or specifications.

The target storage container is coupled with the defrosting module, to render the module sufficiently in contact with the container for effective heat transfer. The coupling may comprise either docking, at step 1210, the target storage container to at least a portion of the defrosting module (e.g., the target storage container is lowered onto a dock of the defrosting module), or placing, at step 1215, the defrosting module at least partially inside of the target storage container (e.g., the defrosting module is lowered into an opening of the target storage container).

Alternatively, the coupling comprises a combination of the above steps, as indicated by the dashed arrow in Fig. 12. In one example, the target storage container docks to a first unit of the defrosting module, and a second unit of the defrosting module is placed at least partially inside of the target storage container (e.g., the second unit is lowered into the docked storage container). Docking the target storage container and subsequently inserting a unit of the defrosting module provides additional connection to and control of the target storage container, thereby facilitating reliable heating and drainage of the storage container.

Once the target storage container and the defrosting module are coupled, the defrosting module proceeds to defrost, at step 1220, the target storage container. This may comprise activating, e.g., from a controller, a heat source of the defrosting module to heat the target storage container. Alternatively, the heat source of the defrosting module may have been activated prior to coupling, e.g., to get the module up to a sufficient temperature before coupling.

During defrosting, moisture maybe extracted, at step 1225, from the target storage container. In particular, meltwater may flow out of the target storage container through a drain or a perforation in the container. The defrosting module may couple to the base of the target storage container such that an inlet of the defrosting module can collect meltwater which has collected at the base of the storage container.

Additionally or alternatively, a vacuum system or airflow system of the defrosting module may direct water or humid air out of the storage container through an inlet, to facilitate water extraction or to enable water to be extracted with defrosting module against the pull of gravity (e.g., if the defrosting module has been lowered into the storage container from above). It will be understood that step 1225 is optional and in some cases the system simply relies on the moisture evaporating away without any specific extraction mechanisms.

### Penultimate comments

Further examples of the presently disclosed systems and methods include the following.

The defrosting module according to any implementation discussed herein, further comprising a humidity sensor configured to determine a humidity level within the storage container and/or the defrosting module.

The defrosting module according to any implementation discussed herein, further comprising an air pump configured to circulate air around and/or through the defrosting module.

A controller comprising a processor and a memory, the controller configured to perform any of the methods discussed herein.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A defrosting module for defrosting a storage container of a storage and retrieval system, the defrosting module comprising:
a heat source for defrosting the storage container within a storage grid of the storage and retrieval system;
wherein the defrosting module is configured to be coupled with the storage container by a robotic vehicle of the storage and retrieval system.

2. The defrosting module of claim 1, further comprising an inlet configured to extract moisture from the storage container, optionally wherein the inlet comprises a vacuum system.

3. The defrosting module of any preceding claim, wherein the heat source comprises an outlet configured to emit heated air.

4. The defrosting module of claims 2 or 3, wherein the inlet and/or the outlet are configured to mate with an outer surface of the storage container.

5. The defrosting module of any preceding claim, further comprising a lid configured to provide an enclosed volume for the storage container when the defrosting module is coupled to the storage container.

6. The defrosting module of any preceding claim, wherein:
the defrosting module is retrievable by the robotic container-handling vehicle; and/or
the defrosting module is placeable at least partially inside of the storage container.

7. The defrosting module of any preceding claim, wherein the defrosting module comprises a dock, said dock configured to receive the storage container.

8. The defrosting module of any preceding claim, wherein the defrosting module includes:
an upper unit that is placeable at least partially inside the storage container; and
a lower unit comprising a/the dock configured to receive the storage container;
optionally wherein the upper and lower units are vertically moveable relative to one another to couple the upper unit with the lower unit.

9. A container storage and retrieval system including:
a storage grid;
a robotic vehicle arranged to traverse the storage grid;
a storage container stored within the storage grid; and
the defrosting module of any of claims 1 to 8.

10. The system of claim 9, wherein the defrosting module is provided at a fixed location within the storage grid.

11. The system of any of claim 9 or 10, wherein the storage container comprises a perforated base configured to facilitate water extraction.

12. A method of defrosting a storage container of a storage and retrieval system, the method comprising:
causing one or more robotic vehicles to couple a storage container stored within a storage grid of the storage and retrieval system with the defrosting module of any of claims 1 to 8.

13. The method of claim 12, wherein coupling the storage container with the defrosting module comprises:
docking the storage container to the defrosting module; and/or
placing the defrosting module at least partially inside of the storage container.

14. The method of claim 12 or 13, further comprising, prior to coupling the storage container and the defrosting module, identifying that the storage container is empty.

15. A computer-readable medium, or computer program, comprising instructions which, when executed by a computer, cause the computer to carry out the method of any of claims 12 to 14.
